# EUROPÄISCHE PATENTANMELDUNG

(11) **EP 0 752 204 A1**
(43) Veröffentlichungstag der Anmeldung: **08.01.1997**
(21) Anmeldenummer: 96110031.0
(22) Anmeldetag: 21.06.1996
(51) Int. Cl.: A01F 15/08, A01F 15/14

(54) **Ballenpresse**

(30) Priorität: 07.07.1995 DE 29511023 U
(71) Anmelder: Maschinenfabriken Bernard Krone GmbH, D-48480 Spelle (DE)
(72) Erfinder: Krone, Bernard, 48480 Spelle (DE); Schniederbruns, Bernhard, Dipl.-Ing. FH, 49835 Wietmarschen (DE)

(57) **Zusammenfassung**

Ballenpresse für landwirtschaftliche Erntegüter zur Erzeugung rechteckiger Ballen mit einstellbarer Ballenlänge mittels einem in einem Preßkanal (5) bewegbaren Preßkolben, bei der eine Ballenlängen-Meßvorrichtung zum Auslösen einer Bindevorrichtung bei Erreichen einer eingestellten Ballenlänge vorgesehen ist, wobei dem Preßkanal (5) ein Meßaufnehmer (9) zur Ermittelung der Länge des aus dem Preßkanal (5) austretenden Preßstranges (10) zugeordnet ist und der Meßaufnehmer (9) lediglich eine in Austrittsrichtung (A) gerichtete Verschiebung des Preßstranges (10) registriert.

## Beschreibung

Die Erfindung betrifft eine Ballenpresse gemäß dem Oberbegriff des Anspruchs 1 zur Erzeugung rechteckiger Ballen aus landwirtschaftlichem Erntegut, wie beispielsweise Heu, Stroh oder angewelktes Halmgut. Eine derartige und für sich bekannte Ballenpresse weist neben den Zuführorganen zur Förderung des Erntegutes in einen Preßkanal und den Preß- und Bindevorrichtungen eine Meßeinrichtung zur Feststellung der Ballenlänge und zum Auslösen der Bindevorrichtung auf. Da eine Vielzahl der Ballenpressen im überbetrieblichen Einsatz oder bei Lohnunternehmern betrieben werden, ist es besonders wichtig, daß dem Betreiber exakte und zuverlässige Angaben zur Berechnung der geleisteten Arbeit vorliegen. Eine wesentliche Kenngröße dazu ist die Länge des gepreßten Ballens.

In einer DE 38 09 132-C1 wird vorgeschlagen, die Hubzahl des Preßkolbens als Meßgröße zur Ermittelung der Ballenlänge heran zu ziehen. Hierbei wird davon ausgegangen, daß die mit einem Kolbenhub des Preßkolbens erreichte Verschiebung des Ballens eine konstante Größe darstellt, so daß aus der Verschiebung pro Hub und der Hubzahl des Preßkolbens die exakte Länge eines Ballens ermittelt werden kann. Aus der Praxis jedoch weiß man, daß die zuverarbeitenden Erntegüter sich nicht alle gleich stark verdichten lassen. Weiterhin kann nicht davon ausgegangen werden, daß als Folge unterschiedlicher Erntegutschwaden eine absolut gleichmäßig vorgepreßte Befüllung der Preßkammer bei jedem Kolbenhub erreicht wird. Somit ist es nicht möglich anhand der vorgeschlagenen Meßgrößen eine Ermittelung der Ballenlänge mit hinreichender Genauigkeit durchzuführen.

Aus einer weiteren Anmeldung, EP 0 573 342-A1 geht hervor, daß zur Feststellung der Ballenlänge ein unmittelbar hinter der Bindevorrichtung und oberhalb des Preßkanals drehbar gelagertes Sternrad verwendet wird, wobei beim Umlauf des Sternrades von einem Zählinstrument die Anzahl der Zackenspitzen gezählt werden. Im genannten Meßbereich hinter der Bindevorrichtung führt der Ballen beim Rückhub des Preßkolben eine große Rückdehnung aus, die ebenfalls vom Sternrad gemessen bzw. gezählt wird. Dabei ist es nicht möglich, die Zählimpulse einer Vorwärtsbewegung von einer Rückwärtsbewegung zu unterscheiden. Zu dem läßt sich anhand der gezählten Zackenspitzen des Sternrades kein exakte Längenermittelung des Ballens durchführen. Ein weiterer Nachteil der beschriebenen Meßanordnung besteht darin, daß der Ballen beim Verlassen des Preßkanals expandiert, wobei auch die Länge des Ballens zunimmt. Die Messung erfolgt also in einem Bereich, in dem der Ballen unter Druck steht und seine tatsächliche Länge überhaupt nicht aufweist. Dadurch ergeben sich zusätzlich Ungenauigkeiten bei der Ermittelung der Ballenlänge und damit bei der Berechnung der von der Ballenpresse geleisteten Arbeit.

Aufgabe der Erfindung ist es, eine Ballenpresse für landwirtschaftliche Erntegüter zur Erzeugung rechteckiger Ballen zu schaffen, bei der mittels einer einfachen und kostengünstigen Einrichtung die tatsächliche Länge des den Preßkanal verlassenden und auf dem Feld abzulegenden Preßstranges ermittelt werden kann.

Diese Aufgabe wird durch die im kennzeichnenden Teil des Anspruchs 1 aufgeführten Merkmale gelöst. Hinsichtlich der weiteren Ausgestaltung der Erfindung wird auf die Ansprüche 2 bis 18 verwiesen.

Bei einer erfindungsgemäßen Ballenpresse zur Erzeugung rechteckiger Ballen aus landwirtschaftlichem Erntegut ist dem Preßkanal ein Meßaufnehmer zugeordnet, der eine Erfassung der Länge eines aus einem Preßkanal austretenden und auf dem Feld abzulegenden Preßstranges unabhängig von der aktuell eingestellten Ballenlänge ermöglicht. Dabei wird von dem Meßaufnehmer lediglich eine in Austrittsrichtung gerichtete Verschiebung des Preßstranges registriert, so daß eine Beeinflussung der Längenmessung des Preßstranges durch eine Rückdehnung des Ballens beim Rückhub des Preßkolbens sicher vermieden wird. Somit wird dem Betreiber eine Möglichkeit geschaffen, über die exakte Länge des Preßstranges eine korrekte Berechnung der geleisteten Arbeit vorzunehmen.

Der Meßaufnehmer ist im hinteren Bereich des Preßkanals nahe der Austrittsöffnung um eine horizontal und quer zum Preßkanal angeordnete Achse entgegen der Federkraft einer Zugfeder schwenkbar gelagert. Die Messung der Länge des Preßstranges findet damit in einem Bereich statt, indem beim Verlassen des Preßkanals der Ballen sich bereits auf seine tatsächliche Länge ausgedehnt hat. Der Meßaufnehmer besteht dabei vorzugsweise aus einem Sternrad und einem Zählrad, die innerhalb von Seitenlaschen gelagert sind. Das Sternrad rollt auf der Oberfläche des Preßstranges ab und treibt dabei das Zählrad an. Durch die Verbindung des Sternrades mit dem Zählrad mittels einer Mitnehmerkupplung wird erreicht, daß bei einer Drehung des Sternrad im Uhrzeigergegensinn bei nach links in der Bildebene fahrender Ballenpresse das Zählrad ebenfalls in Drehung versetzt wird, während bei einer Drehung des Sternrades im Uhrzeigersinn das Zählrad stehen bleibt. Damit das Zählrad auf keinen Fall eine Drehung im Uhrzeigersinn ausführt, ist das Zählrad durch eine Bremsvorrichtung abbremsbar ausgebildet.

Zur Längenermittelung ist das Zählrad an seinem Umfang gleichmäßig verteilt mit rechteckförmigen Aussparungen versehen. Bei einer Verdrehung des Zählrades wird von einem am Umfang des Zählrades angeordneten Zählelement die Anzahl der Aussparung gezählt, die dann von einer geeigneten Auswerte- bzw. Anzeigeeinrichtung abgelesen werden können. Die Anzahl der Aussparungen am Umfang des Zählrades bestimmt dabei die Auflösung des Meßergebnisses. Als Zählelemente können dabei sowohl mechanische als auch elektrische, vorzugsweise jedoch elektronische Sensoren eingesetzt werden. Die elektronischen Sensoren sind derart ausgebildet, daß jeweils am Anfang und am Ende einer Aussparung ein Zählimpuls auftritt, d.h. eine negative Flanke von high nach low und eine positive Flanke von low nach high werden gezählt.

Beim Schaltvorgang einer Flanke von low nach high und zurück von high nach low weisen die elektronischen Sensoren eine Schalthysterese auf, so daß Schwingungen des Zählrades im unmittelbaren Schaltbereich einer Flanke nicht zu Mehrfachzählungen führen.

In einem weiteren Ausführungsbeispiel ist das Sternrad fest mit dem Zählrad verbunden und dem Zählrad sind an seinem Umfang in Drehrichtung hintereinander zwei Zählelemente, vorzugsweise elektronische Sensoren zugeordnet. Die elektronischen Sensoren sind dabei derart angebracht, daß zwischen den Schaltzuständen eine Phasenverschiebung besteht. Dadurch ist es möglich, exakt zwischen den beiden möglichen Drehrichtungen des Zählrades zu unterscheiden, so daß hierbei auch nur Zählimpulse aufgrund einer Drehung des Zählrades im Uhrzeigergegensinn registriert werden. Die Phasenverschiebung beträgt im beschriebenen Ausführungsbeispiel vorteilhafterweise 90 Grad.

Durch die Erfindung wird eine Meßaufnehmeranordnung vorgeschlagen, die es dem Betreiber der Ballenpresse ermöglicht, exakt die Länge eines je Feldeinheit oder je Kunde erzeugten Preßstranges anzugeben. Weiterhin ist es denkbar, mit der erfindungsgemäßen Meßaufnehmeranordnung als indirekte oder vergleichende Messung auch die Länge der einzeln Ballen zu bestimmen und beim Überschreiten eines Vorgabewertes den Bindevorgang einzuleiten.

Eine detaillierte Beschreibung des Gegenstandes der Erfindung erfolgt nun anhand von Ausführungsbeispielen. In den dazugehörigen Zeichnungen stellen im einzelnen dar:
- Fig.1: eine Gesamtseitenansicht einer erfindungemäßen Ballenpresse;
- Fig.2: eine teilweise abgebrochene, vergrößerte Darstellung eines erfindungsgemäßen Meßaufnehmers nach Einzelheit X in Fig. 1;
- Fig.3: eine teilweise abgebrochene Schnittdarstellung des Meßaufnehmers gemäß Schnitt III - III in Fig. 2;
- Fig.4: ein weiteres Ausführungsbeispiel eines erfindungsgemäßen Meßaufnehmers nach Einzelheit X in Fig. 1;
- Fig.5: eine teilweise abgebrochene Schnittdarstellung gemäß Schnitt V - V in Fig. 4;
- Fig.6: eine vereinfachte, teilweise abgebrochene und vergrößerte Darstellung der Einzelheit Y in Fig. 4 bei einer Verdrehung in Uhrzeigergegensinn;
- Fig 7: eine vereinfachte, teilweise abgebrochene und vergrößerte Darstellung der Einzelheit Y in Fig. 4 bei einer Verdrehung im Uhrzeigersinn;

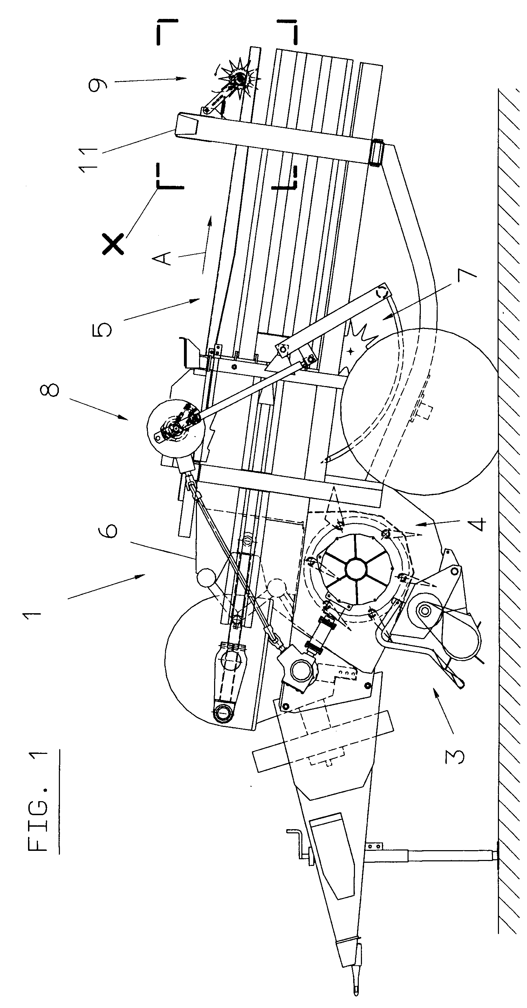

Eine in Fig.1 dargestellte Ballenpresse 1 dient der Erzeugung rechteckiger Ballen 2 aus landwirtschaftlichem Erntegut, wie beispielsweise Heu, Stroh oder angewelktes Halmgut. Die Ballenpresse 1 wird dabei von einem nicht dargestellten landwirtschaftlichen Ackerschlepper oder dgl. Zugmaschine gezogen und über eine ebenfalls nicht dargestellte Gelenkwelle vom Ackerschlepper aus angetrieben. Die Ballenpresse verfügt über eine Aufsammelvorrichtung 3 und eine nachfolgende Fördereinrichtung 4 zur Förderung des Erntegutes in Preßkanal 5, in dem durch einen hin- und herbewegbaren Preßkolben 6 das Erntegut zu Ballen 2 gepreßt wird. Eine Meßvorrichtung 7 stellt dabei die Länge des entstehenden Ballens 2 fest und leitet bei Überschreiten einer vorgewählten Länge den Bindevorgang eine Bindevorrichtung 8 ein.

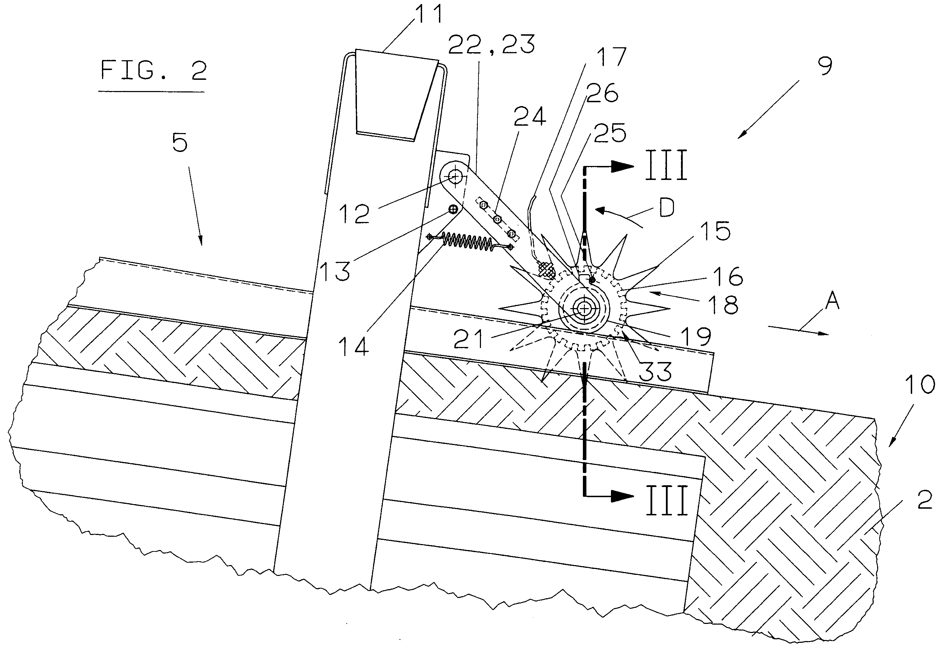

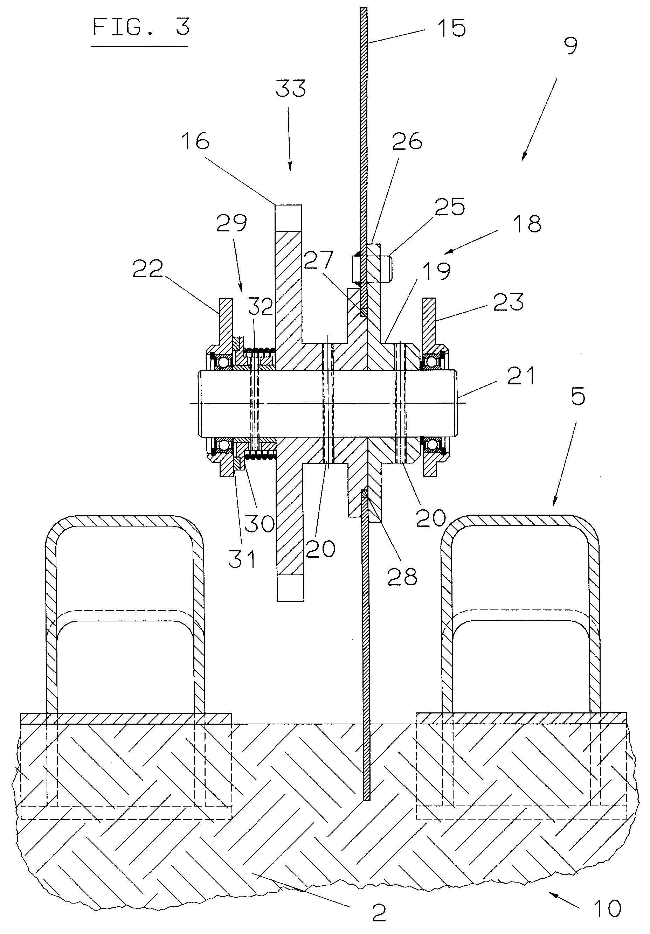

Wie aus den Figuren 2 und 3 ersichtlich, ist dem Preßkanal 5 im hinteren Bereich nahe der Austrittsöffnung des aus Ballen 2 bestehenden Preßstranges 10 ein Meßaufnehmer 9 zugeordnet, der an einem Tragrahmen 11 des Preßkanals 5 um eine horizontal und quer zum Preßkanal 5 ausgerichtete Achse 12 schwenkbar gelagert ist. Aus einer Ausgangsstellung, in der der Meßaufnehmer 9 an einem Anschlag 13 anliegt, kann sich der Meßaufnehmer 9 durch eine Schwenkbewegung um die Achse 12 entgegen der Federkraft einer Zugfeder 14 der Oberfläche des Preßstranges 10 anpassen, damit Schlupf zwischen dem Preßstrang 10 und dem Meßaufnehmer 9 vermieden wird.

Der Meßaufnehmer 9 besteht im wesentlichen aus einem Sternrad 15 und einem Zählrad 16, dem ein Zählelement 17 zugeordnet ist. Das Sternrad 15 und das Zählrad 16 sind über eine Mitnehmerkupplung 18 miteinander derart verbunden, daß bei einer Verdrehung des Sternrades 15 in Drehrichtung D das Zählrad 16 ebenfalls eine Verdrehung in Drehrichtung D erfährt, während bei einer Verdrehung des Sternrades 15 entgegen der Drehrichtung D das Zählrad 16 stehen bleibt. Dadurch wird erreicht, daß vom Meßaufnehmer 9 lediglich eine in Austrittsrichtung A gerichtete Verschiebung des Preßstranges 10 registriert wird.

Die Mitnehmernabe 19 und das Zählrad 16 sind durch Spannstifte 20 mit einer Welle 21 verbunden, die in Seitenlaschen 22,23 drehbar gelagert ist. Zur axialen Arretierung der Seitenlaschen 22,23 auf der Welle 21 dient ein Verbindungssteg 24, der mit den Seitenlaschen 22,23 eine Einheit bildet. Im dargestellten Ausführungsbeispiel sind die Seitenlaschen 22,23 mit dem Verbindungssteg 24 verschraubt. Das Sternrad 15 weist einen Mitnehmerstift 25 auf, der bei Anlage am Nocken 26 der Mitnehmernabe 19 eine Verdrehung des Zählrades 16 in Drehrichtung D ermöglicht. Bei einer Verdrehung des Sternrades 15 entgegen der Drehrichtung D dreht sich das Sternrad 15 auf der Lagerbuchse 27 des Lageransatzes 28 des Zählrades 16. Damit eine Verdrehung des Zählrades 16 entgegen der Drehrichtung D sicher vermieden wird, ist das Zählrad 16 gegenüber der Seitenlasche 22 durch eine Bremsvorrichtung 29 abbremsbar ausgebildet. Die Bremsvorrichtung 29 besteht dabei aus einer Nabe 30 und einer Bremsscheibe 31, wobei die Bremskraft von einer Druckfeder 32 aufgebracht wird.

Zur Ermittelung der Länge des Preßstranges 10 weist das Zählrad 16 rechteckförmige Aussparungen 33 auf, die gleichmäßig am Umfang verteilt sind. Über die Anzahl der Aussparungen 33 des Zählrades 16 wird die Auflösung des Meßergebnisses bei der Längenmessung des Preßstranges 10 vorgegeben. Bei der Verdrehung des Zählrades 16 passieren die Aussparungen 33 ein am Umfang des Zählrades 16 angeordnetes und als elektronischen Sensor ausgebildetes Zählelement 17. Dabei wird jeweils der Anfang und das Ende einer Aussparung 33, d.h. eine negative Flanke von high nach low und eine positive Flanke von low nach high gezählt. Die Zählimpulse können nun an geeignete Auswerte- bzw. Anzeigeeinrichtungen weitergeleitet und dort angezeigt werden und/oder als Steuersignal beispielweise in einer Regeleinrichtung zur Einleitung des Bindevorganges der Bindevorrichtung 8 verwendet werden.

Um im unmittelbaren Schaltbereich einer Flanke Mehrfachzählungen infolge von Schwingungen des Zählrades 16 oder des als elektronischen Sensor ausgebildeten Zählelementes 17 auszuschließen, weisen die Zählelemente 17 beim Schaltvorgang einer Flanke von beispielweise low nach high und zurück von high nach low eine Schalthysterese auf. Das bedeutet, daß der Schaltzeitpunkt von low nach high und umgekehrt von high nach low nicht übereinstimmt.

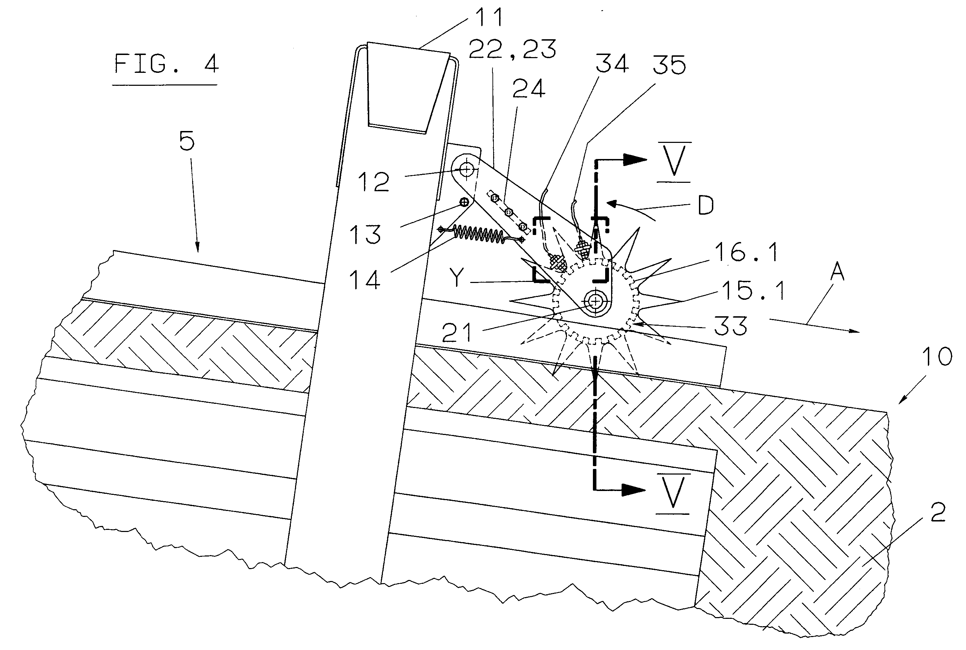

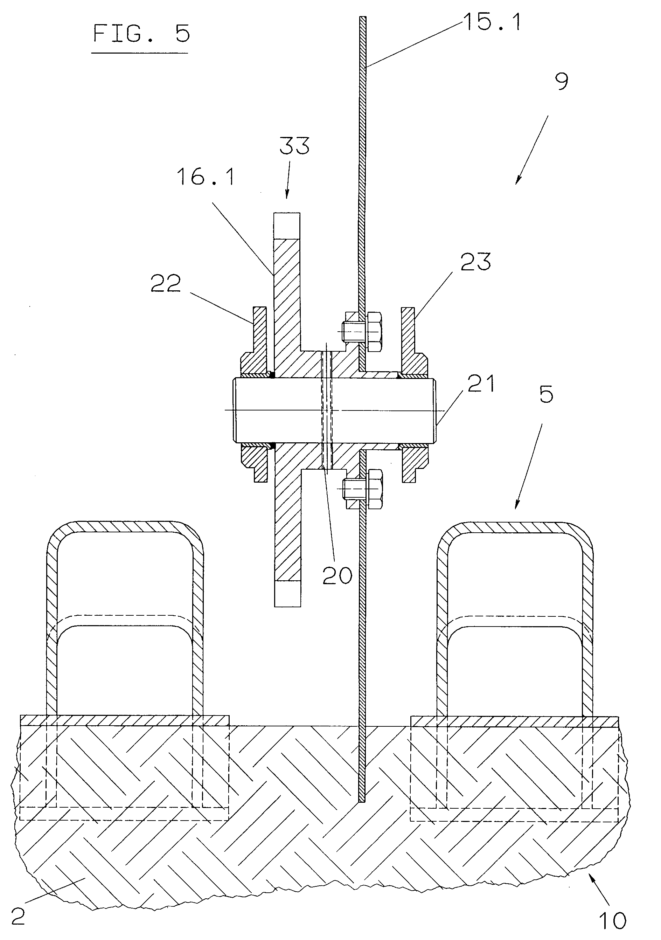

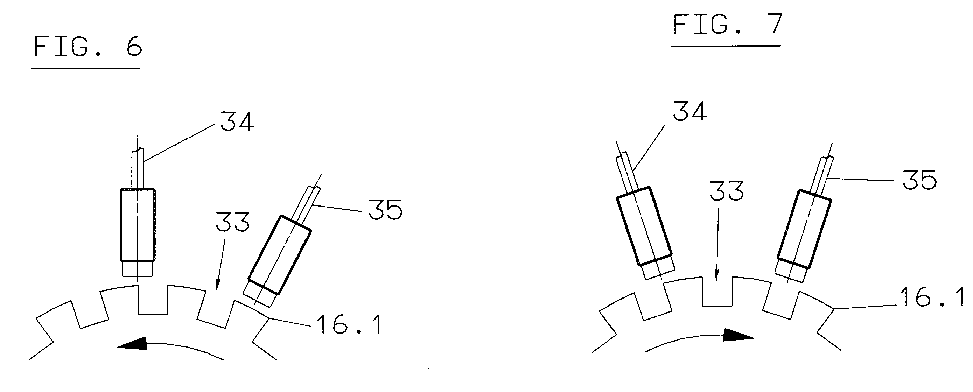

Ein weiteres Ausführungsbeispiel, dargestellt in Fig. 4 und 5, beschreibt einen Meßaufnehmer 9, bei dem das Sternrad 15.1 fest mit Zählrad 16.1 verschraubt ist und dem Zählrad 16.1 an seinem Umfang in Drehrichtung D hintereinander zwei als elektronische Sensoren ausgebildete Zählelemente 34,35 zugeordnet sind. Die als elektronische Sensoren ausgebildeten Zählelemente 34,35 sind dabei derart angebracht, daß zwischen den Schaltzuständen eine Phasenverschiebung entsteht, die im beschriebenen Ausführungsbeispiel vorzugsweise 90 Grad beträgt. Die Anordnung der Zählelemente 34,35 bzw. ihre Wirkungsweise wird in den Figuren 6 und 7 näher veranschaulicht. Eines der Zählelemente 34,35 wird dabei als Zähler eingesetzt, während das andere Zählelement 34 oder 35 als Abfrager zur Bestimmung der Drehrichtung verwendet wird. Steht beispielsweise beim Zählen einer positiven Flanke von low nach high eines ersten Zählelementes 34 das zweite Zählelement 35 im Zustand high, so bedeutet dies eine Drehrichtung des Zählrades 16.1 im Uhrzeigergegensinn (Fig.6). Das Zählen einer positiven Flanke durch das Zählelement 34 im Zustand low des Zählelementes 35 ergibt eine Drehrichtung des Zählrades 16.1 im Uhrzeigersinn. Die Zählimpulse bzw. Zustände der Zählelemente 34,35 können nun von geeigneten Auswerte- und Anzeigeeinrichtungen abgefragt und ausgewertet und dem Benutzer angezeigt werden.

Obwohl in den Zeichnungen und der dazugehörigen Beschreibung bevorzugte Ausführungsbeispiele aufgezeigt wurden, sind weitere Modifikationen und Ausführungen denkbar, ohne den Grundgedanken und den Rahmen der Erfindung zu verlassen. So ist es beispielsweise vorstellbar, den Meßaufnehmer 9 unterhalb des Preßkanals 5 oder in den Seitenwänden des Preßkanals 5 nahe der Austrittsöffnung des Preßstranges 10 anzubringen.

## Patentansprüche

1. Ballenpresse für landwirtschaftliche Erntegüter zur Erzeugung rechteckiger Ballen mit einstellbarer Ballenlänge mittels einem in einem Preßkanal (5) bewegbaren Preßkolben (6), wobei eine Ballenlängen-Meßvorrichtung zum Auslösen einer Bindevorrichtung (8) bei Erreichen einer eingestellten Ballenlänge vorgesehen ist, dadurch gekennzeichnet, daß dem Preßkanal (5) ein Meßaufnehmer (9) zur Ermittelung der Länge des aus dem Preßkanal (5) austretenden Preßstranges (10) zugeordnet ist und der Meßaufnehmer (9) lediglich eine in Austrittsrichtung (A) gerichtete Verschiebung des Preßstranges (10) registriert.

2. Ballenpresse nach Anspruch 1, dadurch gekennzeichnet, daß der Meßaufnehmer (9) im hinteren Bereich nahe der Austrittsöffnung des Preßkanals (5) angeordnet ist.

3. Ballenpresse nach den Ansprüchen 1 und 2, dadurch gekennzeichnet, daß der Meßaufnehmer (9) oberhalb des Preßkanals (5) um eine horizontal und quer zum Preßkanal (5) ausgerichtete Achse (12) schwenkbar an einem Trägerrahmen (11) gelagert ist.

4. Ballenpresse nach den Ansprüchen 1 bis 3, dadurch gekennzeichnet, daß der Meßaufnehmer (9) um die Achse (12) entgegen der Federkraft einer Zugfeder (14) im Uhrzeigergegensinn verschwenkbar ist (Fig. 1,2 und 4).

5. Ballenpresse nach den Ansprüchen 1 bis 4, dadurch gekennzeichnet, daß der Meßaufnehmer (9) ein Sternrad (15) und ein Zählrad (16) aufweist, welche innerhalb von Seitenlaschen (22,23) gelagert sind.

6. Ballenpresse nach den Ansprüchen 1 bis 5, dadurch gekennzeichnet, daß das Sternrad (15) über eine Mitnehmerkupplung (18) mit dem Zählrad (16) derart verbunden ist, daß bei einer Drehung des Sternrades (15) in Drehrichtung (D) das Zählrad (16) ebenfalls in Drehung versetzt wird, während bei einer Drehung des Sternrades (15) entgegen der Drehrichtung (D) das Zählrad (16) stehen bleibt.

7. Ballenpresse nach den Ansprüchen 1 bis 6, dadurch gekennzeichnet, daß das Zählrad (16) durch eine Bremsvorrichtung (29) gegenüber der Seitenlasche (22) abbremsbar ausgebildet ist.

8. Ballenpresse nach den Ansprüchen 1 bis 7, dadurch gekennzeichnet, daß das Zählrad (16) gleichmäßig am Umfang verteilt Aussparungen (33) aufweist.

9. Ballenpresse nach Anspruch 8, dadurch gekennzeichnet, daß die Aussparungen (33) rechteckförmig ausgebildet sind.

10. Ballenpresse nach den Ansprüchen 1 bis 9, dadurch gekennzeichnet, daß dem Zählrad (16) des Meßaufnehmers (9) ein Zählelement (17) zugeordnet ist.

11. Ballenpresse nach Anspruch 10, dadurch gekennzeichnet, daß das Zählelement (17) ein elektronischer Sensor ist.

12. Ballenpresse nach Anspruch 11, dadurch gekennzeichnet, daß das als elektronischer Sensor ausgebildete Zählelement (17) zwischen dem Einschalt- und dem Ausschaltpunkt eine Schalthysterese aufweist.

13. Ballenpresse nach den Ansprüchen 1 bis 5, dadurch gekennzeichnet, daß der Meßaufnehmer (9) aus einem Sternrad (15.1) und einem Zählrad (16.1) besteht, wobei das Sternrad (15.1) fest mit dem Zählrad (16.1) verbunden ist.

14. Ballenpresse nach den Ansprüchen 1 bis 5 und 13, dadurch gekennzeichnet, daß dem Zählrad (16.1) zwei Zählelemente (34,35) zugeordnet sind.

15. Ballenpresse nach den Ansprüchen 1 bis 5 und 13, 14, dadurch gekennzeichnet, daß die Zählelemente (34,35) am Umfang des Zählrades (16.1) in Drehrichtung (D) hintereinander angeordnet sind.

16. Ballenpresse nach den Ansprüchen 1 bis 5 und 13 bis 15, dadurch gekennzeichnet, daß beide Zählelemente (34,35) elektronische Sensoren sind.

17. Ballenpresse nach den Ansprüchen 1 bis 5 und 13 bis 16, dadurch gekennzeichnet, daß die als elektronische Sensoren ausgebildeten Zählelemente (34,35) am Umfang des Zählrades (16.1) derart angeordnet sind, daß zwischen den Schaltzuständen der Sensoren eine Phasenverschiebung besteht.

18. Ballenpresse nach Anspruch 17, dadurch gekennzeichnet, daß die Phasenverschiebung 90 Grad beträgt.
